(19) Europäisches Patentamt
European Patent Office
Office européen des brevets

(11) EP 2 541 935 A1

(12) **EUROPEAN PATENT APPLICATION**

(43) Date of publication:
**02.01.2013 Bulletin 2013/01**

(51) Int Cl.:
***H04N 7/26*** (2006.01)

(21) Application number: **11250612.6**

(22) Date of filing: **29.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **British Telecommunications Public Limited Company**
**London EC1A 7AJ (GB)**

(72) Inventor: **The designation of the inventor has not yet been filed**

(74) Representative: **Lau, Chi-Fai et al**
**BT Group Legal**
**Intellectual Property Department**
**PP C5A, BT Centre**
**81 Newgate Street**
**London**
**EC1A 7AJ (GB)**

(54) **Video coding with quality control and rate control**

(57) A sequence of video encoded at largely constant quality is examined to identify the ratio of the bit rate versus quality. Chunks of the sequence are identified where a significant reduction in bit rate is achieved for a given reduction in quality. For those chunks where the reduction is most significant, the reduced bit rate is used instead to help reduce the size of the final encoded file. Two specific methods to achieve this are presented. In the first, the video is initially encoded at a number of constant bit rates, and in the second, the video is encoded at a number of constant qualities. Both define a target or desired quality, as well as a minimum quality and minimum fraction, defining the minimum acceptable quality and the fraction of the total sequence that can be encoded at the minimum quality respectively.

Figure 3

**EP 2 541 935 A1**

## Description

### Field of the Invention

This invention relates to video coding, in particular a bit rate optimised method of encoding of video at near to constant perceptual quality.

### Background to the Invention

Encoded video naturally has variable bit rate, as the number of bits produced when encoding a picture depends on the picture content: how similar it is to previously encoded pictures and how much detail it contains. Some video scenes can be coded to a given quality with a small number of bits, whereas other scenes may require significantly more bits to achieve the same quality. When constant bit rate encoding is used, video has to be coded at time varying quality to meet the bit rate constraint. This has been shown to be sub-optimal to the user, who would prefer to see constant quality. Also, by fixing the bit rate independent of the genre of the video content, some genres of content can be encoded well, such as news and drama, whereas others, such as fast moving sport and music videos and concerts, can only be coded quite poorly.

A user's opinion of the overall perceptual quality of a video sequence is not the mean of the quality of small chunks of the video, but tends to be biased towards the worst quality observed. Hence, by encoding with near constant quality, bits are not wasted encoding some scenes to a higher quality than necessary given the quality at which other scenes may be encoded, and a smaller overall encoded file size can be achieved compared to using constant bit rate encoding.

International application WO2009/112801 describes a method of encoding video with a constant perceptual quality. However, one problem encountered with this and other techniques that encode with constant perceptual quality is that some of the more complex scenes may end up being encoded with very high bit rates.

### Summary of the Invention

It is the aim of embodiments of the present invention to provide an improved method of coding at near constant perceptual quality that addresses some of the above identified problems.

According to one aspect of the present invention, there is provided a video coding method for reducing the size of an encoded video sequence, said encoded video sequence representing a video sequence encoded at a first quality level, said method comprising:

identifying one or more temporal portions of the encoded video sequence for replacing with a respective one or more temporal portions of the video sequence encoded at a lower quality level than the first quality level, wherein the identifying is biased towards the temporal portions in the encoded video sequence that result in the largest reduction in bit count with respect to a given drop in quality; and
replacing the identified one or more temporal portions of the video sequence encoded at the first quality with the respective one or more temporal portions of the video sequence encoded at the second quality.

The quality level may be a perceptual quality level.

Preferably, a fraction of the temporal portions of the video sequence encoded at the first quality is replaced.

Parameters for a target quality and minimum quality are set, which can be used to represent the first and second quality level. Thus, the fraction is the fraction of the temporal portions of the video sequence encoded at the target quality to be replaced by the video sequence encoded at the minimum quality.

Preferably, a temporal portion is a group of pictures.

According to a second aspect of the present invention, there is provided a video encoding system for reducing the size of an encoded video sequence, said encoded video sequence representing a video sequence encoded at a first quality level, said system comprising:

identifying means adapted to identify one or more temporal portions of the encoded video sequence for replacing with a respective one or more temporal portions of the video sequence encoded at a lower quality level than the first quality level, wherein the identifying is biased towards the temporal portions in the encoded video sequence that result in the largest reduction in bit count with respect to a given drop in quality; and
replacing means adapted to replace the identified one or more temporal portions of the video sequence encoded at the first quality with the respective one or more temporal portions of the video sequence encoded at the second quality.

**Brief Description of the Drawings**

For a better understanding of the present invention reference will now be made by way of example only to the accompanying drawings, in which:

Figure 1 is a graph showing the frequency distribution and cumulative frequency distribution of video encoded at a constant quality;
Figure 2 is a block diagram of a video encoder;
Figure 3 is a flow chart illustrating steps of a constant bit rate encoding example of the present invention;
Figure 4 is a flow chart illustrating further steps of the constant bit rate encoding example of the present invention;
Figure 5 is a table showing data relating to encoded video sequences in an example of the present invention;
Figure 6 is a flow chart illustrating steps of a constant quality encoding example of the present invention;
Figure 7 is a table showing data relating to encoded video sequences in a further example of the present invention.

**Description of Preferred Embodiments**

The present invention is described herein with reference to particular examples. The invention is not, however, limited to such examples.

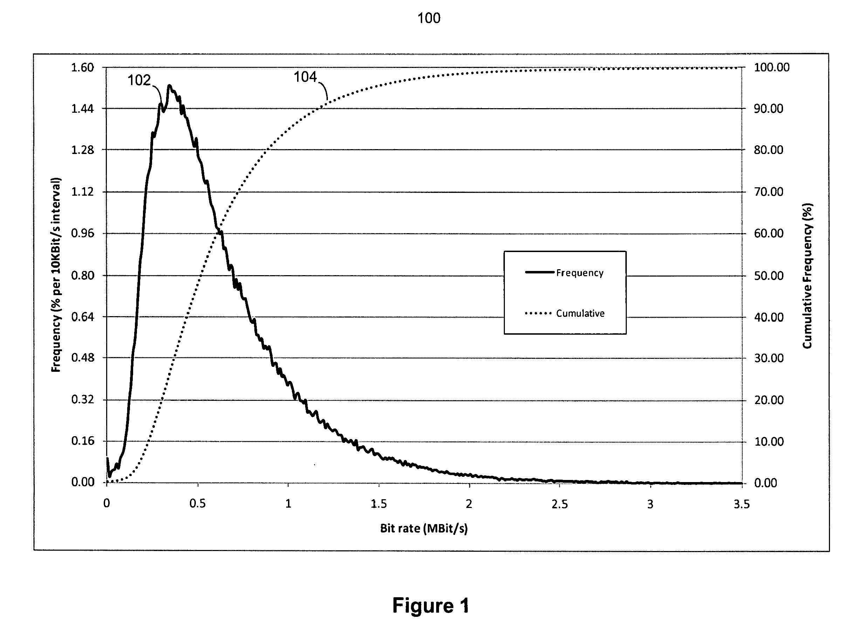

Figure 1 shows the results of encoding 80 hours of Standard Definition (720x576) video content at constant perceptual quality. The encoding may be performed according to any suitable constant perceptual quality coding method, such as the one set out in International application WO2009/112801. In this example, the quality was set to "good". The bit rate required by each group of pictures (consisting of 24 frames, which at 25 frames per second corresponds to a viewing duration of 0.96 seconds) was analysed: the figure shows the resulting frequency distribution 102 of bit rate, when quantised into buckets of 10 KBit/s, and the cumulative frequency distribution 104 of bit rate. Note, the bit rate axis is truncated at 3.5Mb/s.

To achieve "good" quality over all of this content with the given encoder required an average bit rate of 630KBit/s. However, if constant bit rate encoding were used at this bit rate, only 62% of all encoded content would be at "good" quality or better. This is unlikely to be a satisfactory percentage for a commercial service. More likely, it would be required for 90% or more of all encoded content to be at the target ("good") quality or better.

One way of interpreting the data is that even at a low constant encoding bit rate, some content will be encoded at "good" quality. As the bit rate is increased, so the percentage of content encoded at "good" quality increases. This increase is quite fast, and hence worthwhile, in the middle of the range, but as the rate is increased further, there are diminishing returns. It is then a question of what type of service is being offered: is it acceptable for 10% or 20% of content to be encoded at less than "good" quality, or must virtually all content be encoded at "good" quality.

To meet a requirement of 90% of all encoded content to be at "good" quality or better, a constant bit rate encoder would require a bit rate of 1.165MBit/s. If the requirement were 98%, then the bit rate required would increase to 1.81 MBit/s.

In contrast, if constant quality encoding could be used, the average bit rate could be 630KBit/s and 100% of all encoded content could be encoded at good quality. This represents a file size reduction of 46% and 65% respectively compared to the above two cases of constant bit rate encoding.

Thus, it can be seen that constant quality encoding results in significant file size reductions compared to a constant bit rate encoding that achieves similar overall quality.

However, in the context of constant quality encoding, while most of the content can be encoded at "good" quality with a reasonable bit rate, some segments of the content require excessively high bit rates. The highest bit rate observed over the whole of the above test data set is over 13MBit/s, over 20 times the mean bit rate.

Examples of the present invention are aimed in part at addressing this problem. In examples of the present invention, a sequence of video encoded at largely constant quality is examined to identify the ratio of the bit rate versus quality. Chunks of the sequence are identified where a significant reduction in bit rate is achieved for a given reduction in quality. For those chunks where the reduction is most significant, the reduced bit rate is used instead to help reduce the size of the final encoded file. Two specific methods to achieve this are presented. In the first, the video is initially encoded at a number of constant bit rates, and in the second, the video is encoded at a number of constant qualities. Both define a target or desired quality, as well as a minimum quality and minimum fraction, defining the minimum acceptable quality and the fraction of the total sequence that can be encoded at the minimum quality respectively.

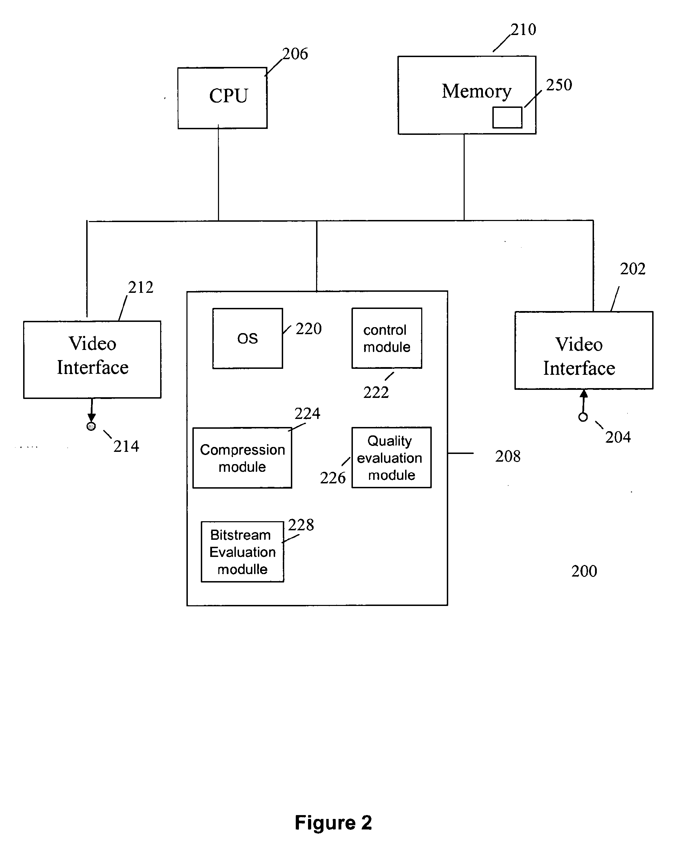

Figure 2 shows a video encoder 200 comprising a video input interface 202 that receives digitally coded video signals 204, in uncompressed form. A processor 206 operates under control of program modules stored in local storage 208, for example a hard disk, and has access to memory 210 and a video output interface 212 for connection, via a telecommunications network to plural client devices. The video output interface 212 may include a buffer to temporarily store video encoded by the processor 206 before outputting the encoded bit stream 214. The memory 210 includes a memory area 250 for storage of parameters associated with the encoded video. The memory 210 may be used to store the encoded bit stream.

The program modules include a general purpose operating system 220 and various video coding software modules which implement one of more of the video coding methods shortly to be described. The software modules comprise several program types, namely:

- a control module 222;
- a compression module 224: in this example the compression software implements a coding algorithm compliant with the ITU H.264 standard;
- a perceptual quality evaluation module 226;
- a bitstream evaluation module 228;

It is understood that a video stream can be received, encoded/compressed and stored in storage 210, for later output via the output interface 212.

Constant bit rate encoding method

In a first methodology, the original video sequence is encoded by the encoder 200 operating under the control of the compression module 224. The encoding is done at a number of different constant bit rate levels. For example, 4 different bit rate levels might be used, resulting in the specific bit rates of 250, 500, 1000 and 1800 KBit/s.

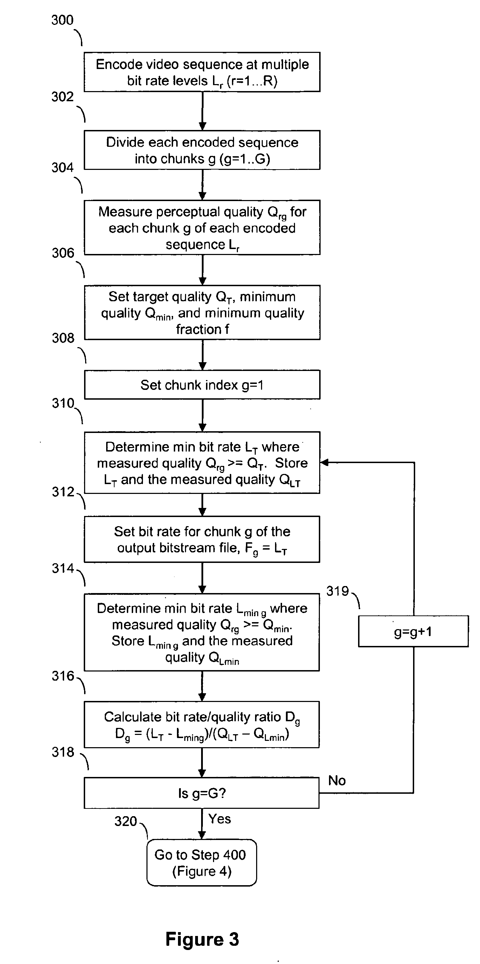

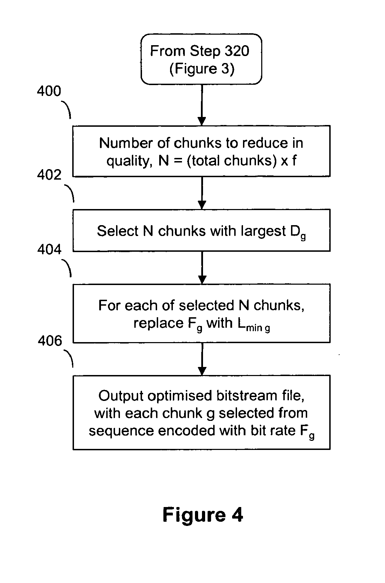

This is illustrated in Figure 3, step 300, where the input video sequence is encoded at a number of bit rate levels $L_r$, where r=1 to R. Here, R is 4, with $L_1$ = 250, $L_2$ = 500, $L_3$ = 1000 and $L_4$ = 1800Kbit/s. In this example, the encoded method is in accordance with the ITU H.264 standard. Other standards could equally be used. The encoded sequences are then stored in the memory 210. In the main, the methods set out in Figure 3 and 4 are performed under control of the control module 222, with certain specific operations performed by one of the other program modules.

In step 302, each of the encoded sequences are divided into chunks g, where g = 1 to G, by the control module 222. In this example, a chunk is a group of pictures, equal to 24 frames.

In step 304, the perceptual quality $Q_{rg}$ of each chunk of each encoded sequence $L_r$ is measured by the perceptual quality evaluation module 226. The measurement can be done according to any suitable method, such as the one described in International patent application WO2007/066066. In this method, the quantiser step size and the spatial complexity of the decoded video frames are used to generate a perceptual quality measure referred to as the mean opinion score, or MOS, ranging from 1 to 5, where 1 is poor and 5 is excellent. Other approaches can be used to measure quality, such as simply using the quantiser index alone as a basis for a quality measure.

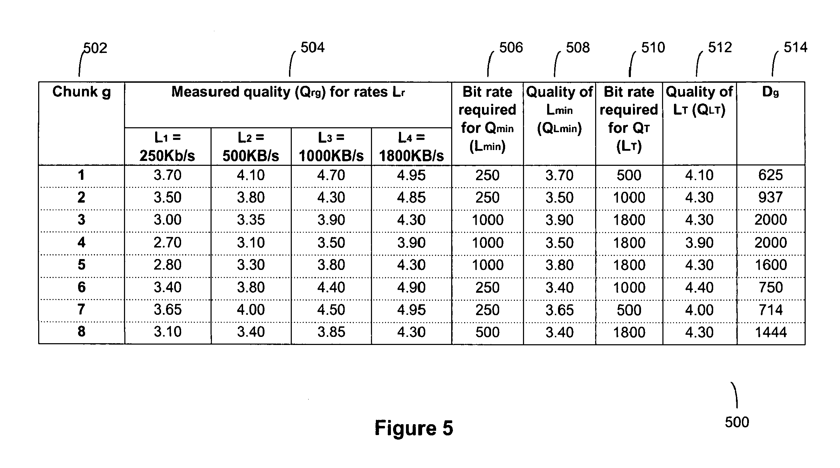

Figure 5 shows an example of a table 500 of the data generated from the chunks of each encoded sequence. The table is stored in memory 210. Column 502 lists the chunk index, g. In this table, 8 chunks are shown. In columns 504, the measured quality $Q_{rg}$, is shown for each chunk and rate $L_r$. Thus, there are 4 columns within 504, one for each of the rates $L_1$ to $L_4$. For example, for the sequence encoded at rate $L_2$ (500KB/s), chunk 5 has a measured quality of MOS = 3.30.

Turning back now to Figure 3, in step 306, some parameters are set. A target quality $Q_T$ is set, which in this example is set to 4.00 (as measured on the MOS scale described above). The target quality $Q_T$ can be considered as the quality at which the video sequence is aimed to be encoded at. A further quality parameter, the minimum quality $Q_{min}$ is the minimum acceptable quality below which none of the video sequence should be encoded. A further parameter, f, is the fraction of the entire encoded sequence that can be encoded at the minimum quality $Q_{min}$. In this example, $Q_{min}$ is set to 3.40, and f is 0.25. The parameters are stored in the memory in 250.

In step 308, the chunk index g is set to 1.

In step 310, the target bit rate $L_T$ at which the measured quality $Q_{rg}$ of chunk g (initially, g=1) is greater than or equal to $Q_T$ is identified by the bitstream evaluation module 228. Referring to table 500, for the first chunk, g=1, and with $Q_T$ = 4.00, the target bit rate, $L_T$, is identified as 500KB/s ($L_2$). The corresponding measured quality at $L_T$ is given by $Q_{LT}$, which in this example is 4.10. If there is not a chunk from any of the encoded sequences that has a measured quality of at least $Q_T$, then the highest bit rate chunk is selected. The identified values for $Q_{LT}$ and $L_T$ can be stored in a table 500 as shown in Figure 5, where column 510 contains $L_T$ values and column 512 contains $Q_{LT}$ values.

In step 312, the bit rate for chunk g of the output bitstream file, $F_g$, is set to $L_T$. So, for the first chunk (g=1) of the output bitstream file, the bit rate used will initially be set to 500KB/s. Or, put another way, chunk 1 from the sequence encoded at 500KB/s is selected for the output bitstream file. Once each chunk is processed according to steps 310 and 312, we build up an initial output bitstream file comprising chunks (or at least index to the chunks) taken from one of the initial encoded video sequences. The result is an initial output bitstream that is largely constant in quality over each chunk.

Now, starting from step 314, we perform some additional calculations to identify chunks of the output bitstream file that would benefit from a further reduction in quality to help reduce the total bit count.

In step 314, the minimum bit rate $L_{ming}$ at which the measured quality $Q_{rg}$ of chunk g is greater than or equal to $Q_{min}$ is identified. Referring to table 500, for the first chunk g=1, and with $O_{min}$ = 3.40, the minimum bit rate, $L_{min}$, is found to be 250KB/s ($L_1$). The corresponding measured quality at $L_{min}$ is given by $Q_{Lmin}$, which in this example is 3.70. If there is not a chunk from any of the encoded sequences that has a measured quality of at least $Q_{Lmin}$, then the sequence with the highest bit rate is selected. The identified values for $Q_{Lmin}$ and $L_{min}$ can be stored in a table 500 as shown in Figure 5, where column 506 contains $L_{min}$ values and 508 contains $Q_{Lmin}$ values.

In step 316, we calculate a ratio, $D_g$, of the difference in the bit rates versus quality given by the following equation:

$$D_g = \frac{(L_T - L_{\min g})}{(Q_{LT} - Q_{L\min})} \qquad\qquad (1)$$

Once calculated, $D_g$ allows us to identify the chunks where there is the largest relative saving in bit rate for a given drop in quality.

Table 500, column 514 shows the calculated values of $D_g$ for each chunk g.

In step 318, a test is done to determine if the chunk index g = G (where G is the total number of chunks). If g is not equal to G, i.e. g is not the last chunk, then processing passes to step 319, where g is incremented by 1, and then steps 310 to 318 repeated. If in step 318, g is equal to G, then all the chunks have been examined (resulting in data similar to that shown in table 500), and processing passes onto step 320, which in turn points to step 400 of Figure 4.

In step 400 of Figure 4, the number of chunks that can be reduced in quality, N, is calculated as (total number of chunks) x f, or G x f. In this example, G = 8, and f = 0.25, so N = 2. In step 402, the N chunks with the highest $D_g$ are selected. This gives the chunks with the greatest reduction in bit rate for a given drop in quality. In this example, the chunks selected are g = 3, and g = 4, where $D_g$ is 2000 for both chunks.

In step 404, the bit rate for chunk g of the output file, $F_g$, for the N identified chunks is updated to $L_{ming}$ for that chunk. So, in this example, $F_3$ and $F_4$ are both set to 1000KB/s each.

In step 406, the final optimised bitstream is output by selecting, for each chunk in the sequence, the chunk encoded with the bit rate identified by $F_g$. This optimised bitstream includes 25% (f=0.25) of the chunks encoded at a lower bit rate than the target bit rate, with those chunks selected optimally according to the method described above.

In this particular example, a bitstream encoded at a constant quality of $Q_T$ = 4.00, would result in the output bitstream comprising chunks encoded at the respective $L_T$ set in step 312. This results in chunks encoded at 500, 1000, 1800, 1800, 1800, 1000, 500 and 1800KB/s. In contrast, adopting the method above, the optimised bitstream would result in chunks g=3 and 4 being replaced, resulting in a bitstream with chunks encoded at 500, 1000, 1000 (instead of 1800), 1000 (instead of 1800), 1800, 1000, 500 and 1800KB/s.

Thus, by adopting the above method, the chunks that offer the greatest reduction in bit rate for a given reduction in quality are identified and selected. The final bit stream is output in step 406, though the required chunks may simply be identified and output when required (for example, retrieved and output on request from the individual encoded sequences, rather than building and storing the optimised output file).

In the examples above, various bit rates are determined and used in calculating the ratio $D_g$. However, as this ratio is calculated per chunk, and the chunk sizes are fixed, then a measurement of the number of bits in each chunk could be used instead of a bit rate. The result would be the same in the sense that the chunks with the largest reduction in bit count for a given reduction in quality are targeted for replacement with chunks of a lower quality.

Whilst the methods above are directed at calculating the ratio of bit rate versus quality between the target bit rate and minimum bit rate, other methods could equally be used where the goal is to determine which chunks give the largest saving in bit rate for a given drop in quality. For example, one possibility is to look at just the change in bit rate, and choose those chunks that give the largest change in bit rate, regardless of the actual change in quality. This is because it could be argued that the original quality is above the first threshold, $Q_T$, and the reduced quality is above the lower threshold, $Q_{min}$, and so the actual values of these is not critical.

Constant quality encoding method

In a second methodology, the original video sequence is encoded by the encoder 200 operating under the control of the compression module 224. The encoding is done at a number of different constant quality levels, which can be done using the method described in WO2009/112801 where a video sequence can be encoded in accordance with a perceptual quality measure, a mean opinion score or MOS. The MOS ranges from 1 to 5, where 1 is poor and 5 is excellent. Alternatively, a simpler method would be just to fix the quantiser step size as the quality level.

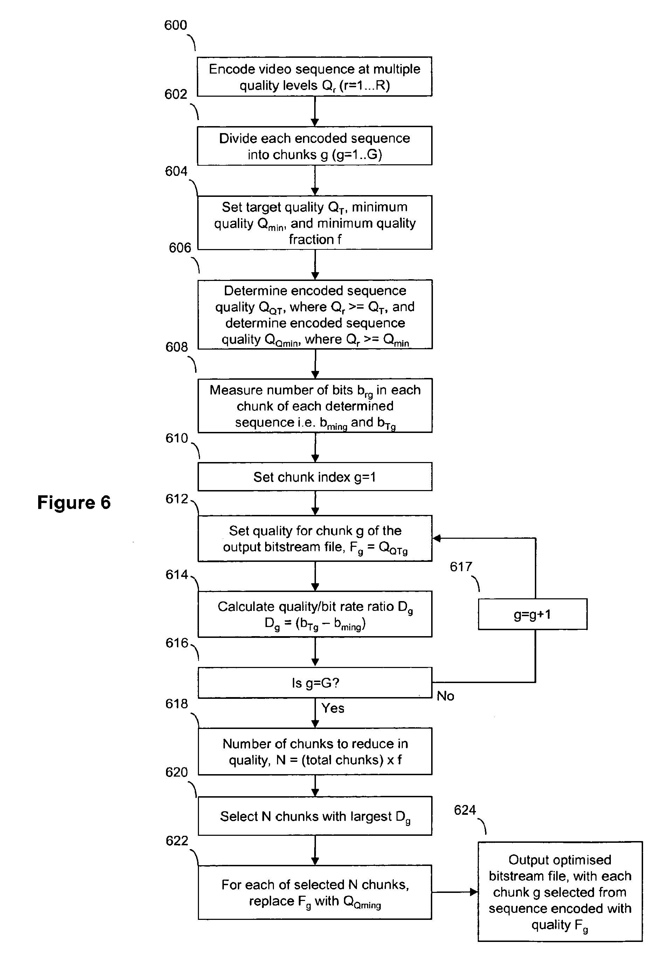

This method is illustrated in Figure 6, and performed under control of the control module 222, with certain specific operations performed by one of the other program modules.

In step 600, a video sequence is encoded at 4 different perceptual quality levels $Q_r$, where r=1 to R. Here, R is 4, with $Q_1$ = (MOS levels of) 3.0, $Q_2$ = 3.5, $Q_3$ = 4.0, and $Q_4$ = 4.5. These quality levels can be chosen to match the likely target and minimum quality threshold parameters set in step 604. The encoded sequences are then stored in the memory 210. Other approaches can be used for encoding at a given quality level, such as by setting the quantiser index used to encode each frame.

In step 602, each of the encoded sequences are divided into chunks g, where g = 1 to G, by the control module 222. In this example, a chunk is a group of pictures, equal to 24 frames. In step 604, some parameters are set. A target quality threshold $Q_T$ is set, which in this example is set to 4.00 (as measured on the MOS scale described above). The target quality $Q_T$ can be considered as the quality at which the video sequence is aimed to be encoded at. A further quality parameter, the minimum quality threshold $Q_{min}$ is the minimum acceptable quality below which none of the video sequence should be encoded. A further parameter, f, is the fraction of the entire encoded sequence that can be encoded at the minimum quality $Q_{min}$. In this example, $Q_{min}$ is set to 3.50, and f is 0.25. As suggested earlier with reference to the encoding step 600, the encoder quality levels may be set to match these two parameters $Q_T$ and $Q_{min}$. As such, this step 604 of setting the parameters may be done before the encoding step 600.

In step 606, the bitstream evaluation module 228 identifies the encoded sequence where the quality level $Q_r$ is greater than or equal to $Q_T$, which we refer to as $Q_{QT}$. In this example where $Q_T$ = 4.0, $Q_{QT}$ = $Q_3$ = 4.0. Similarly, the encoded sequence is identified where the quality is greater than or equal to $Q_{min}$, which we refer to as $Q_{Qmin}$, and in this example is $Q_2$ = 3.50.

If the parameters in step 604 are set in advance of the encoding step 600, then it is only necessary to encode at the 2 quality levels of $Q_T$ and $Q_{min}$. Furthermore, as the quality levels of the encoded sequences are exactly $Q_T$ and $Q_{min}$, step 606 can effectively be omitted.

In step 608, the number of bits, $b_{rg}$, in each chunk g of each identified sequence is measured. Specifically, these are $b_{ming}$ for the chunks that meet the $Q_{min}$ requirement, and $b_{Tg}$ for chunks that meet the $Q_T$ requirement.

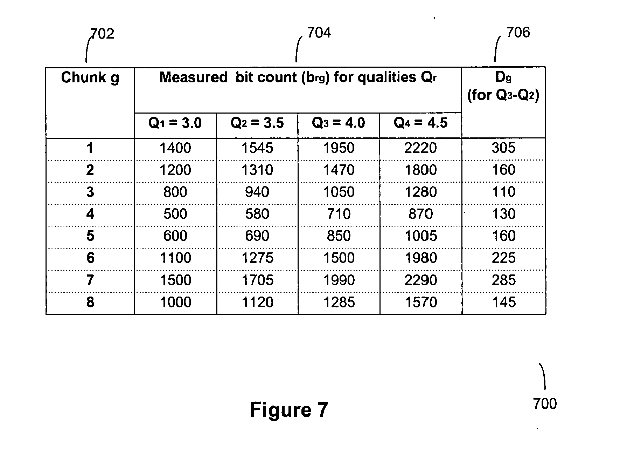

Figure 7 shows an example of a table 700 of the data generated relating to each of the chunks of each encoded sequence. Column 702, is the chunk index, g. In this table, 8 chunks are shown. In columns 704, the number of bits $b_{rg}$, is shown for each chunk of each sequence (at quality $Q_r$). Although in our preferred example, we only need to measure the bit count for the sequences identified in step 606, this table shows all 4 quality levels ($Q_1$ to $Q_4$) within column 704.

In step 610, the chunk index g is set to 1.

In step 612, the quality for chunk g of the output bitstream file, $F_g$, is set to $Q_{QTg}$. Indeed, once each chunk has been processed, $F_g$ for all g will equal $Q_{QT}$. So, in this example, the quality level used for all the chunks will be set to will initially be set to $Q_3$ = 4.0. Or, put another way, the chunks from the sequence encoded at quality level 4.0 are selected for the output bitstream file.

Now, in step 614, we determine which chunks would benefit most from a reduction in quality to help reduce the total bit count. This is done by calculating the difference in the number of bits, for each of the chunks $b_{Tg}$ and $b_{ming}$ as shown in equation (2) below. In Figure 6, this is referred to as the ratio $D_g$, though in this method, there is no need to divide by the difference in qualities as in equation (1) above, as the quality difference is will be the same across all the chunks.

$$D_g = b_{Tg} - b_{\min g} \qquad\qquad (2)$$

Once calculated, $D_g$ allows us to identify the chunks where there is the largest relative saving in bit count for a given drop in quality.

In step 616, a test is done to determine if the chunk index g = G (where G is the total number of chunks). If g is not equal to G, i.e. g is not the last chunk, then processing passes to step 617, where g is incremented by 1, and then steps 612 and 614 repeated. If in step 616, g is equal to G, then all the chunks have been examined (resulting in data similar to that shown in table 700), and processing passes onto step 618.

In step 618, the number of chunks that can be reduced in quality, N, is calculated as (total number of chunks) x f, or G x f. In this example, G = 8, and f = 0.25, so N = 2. In step 620, the N chunks with the highest $D_g$ are selected. This gives the chunks with the greatest reduction in bit count for a given drop in quality.

In step 622, the quality for chunk g of the output file, $F_g$, for the N identified chunks is updated to $Q_{Qming}$.

In step 624, the final optimised bitstream is output by selecting, for each chunk in the sequence, the chunk encoded with the quality identified by $F_g$. This optimised bitstream includes 25% (f=0.25) of the chunks encoded at a lower quality than the target quality (but still equal to or above $Q_{min}$), with those chunks selected optimally according to the method described above.

Thus, by adopting the above method, the chunks that offer the greatest reduction in bit count for a given reduction in quality (from $Q_T$ to $Q_{min}$) are identified and selected. The final bit stream is output in step 624, though the required chunks may simply be identified and output when required (for example, retrieved and output on request from the individual encoded sequences, rather than building and storing the optimised output file).

Whilst the above examples refer to a specific fraction of the total sequence that can be reduced in quality, the final output file does not have to use exactly that fraction. For example, there may be other factors that mean that certain chunks should not be reduced in quality. So, if the fraction f = 0.25, and the total number of chunks is 1000, we may choose to identify the 250 chunks that give the best bit saving according to the methods above, but then only decide to reduce a selected 220 of those chunks. This might occur if the certain chunks have been identified as being unmodifiable or irreplaceable for some reason.

The above examples of the invention are realised, at least in part, by executable computer program code which may be embodied in application program data provided for by the program modules. When such computer program code is loaded into the memory of the video encoder for execution by the processor, it provides a computer program code structure which is capable of performing at least part of the methods in accordance with the above described exemplary embodiments of the invention.

Furthermore, a person skilled in the art will appreciate that the computer program structure referred can correspond to the process flow charts shown in Figures 3, 4 and 6, where each step of the flow chart can correspond to at least one line of computer program code and that such, in combination with the processor in the video encoder, provides apparatus for effecting the described process.

In general, it is noted herein that while the above describes examples of the invention, there are several variations and modifications which may be made to the described examples without departing from the scope of the present invention as defined in the appended claims. One skilled in the art will recognise modifications to the described examples.

## Claims

1. A video coding method for reducing the size of an encoded video sequence, said encoded video sequence representing a video sequence encoded at a first quality level, said method comprising:

   identifying one or more temporal portions of the encoded video sequence for replacing with a respective one or more temporal portions of the video sequence encoded at a lower quality level than the first quality level, wherein the identifying is biased towards the temporal portions in the encoded video sequence that result in the largest reduction in bit count with respect to a given drop in quality; and
   replacing the identified one or more temporal portions of the video sequence encoded at the first quality with the respective one or more temporal portions of the video sequence encoded at the second quality.

2. A video coding method as claimed in claim 1, wherein the quality level is a perceptual quality level.

3. A video coding method as claimed in claim 1 or 2, wherein a fraction of the temporal portions of the video sequence encoded at the first quality is replaced.

4. A video coding method as claimed in claim 1 or 2, wherein a temporal portion is a group of pictures.

5. A video encoding system for reducing the size of an encoded video sequence, said encoded video sequence representing a video sequence encoded at a first quality level, said system comprising:

   identifying means adapted to identify one or more temporal portions of the encoded video sequence for replacing with a respective one or more temporal portions of the video sequence encoded at a lower quality level than the first quality level, wherein the identifying is biased towards the temporal portions in the encoded video sequence that result in the largest reduction in bit count with respect to a given drop in quality; and
   replacing means adapted to replace the identified one or more temporal portions of the video sequence encoded at the first quality with the respective one or more temporal portions of the video sequence encoded at the second quality.

**Figure 1**

EP 2 541 935 A1

EP 2 541 935 A1

**Figure 2**

9

300

Encode video sequence at multiple bit rate levels $L_r$ (r=1...R)

302

Divide each encoded sequence into chunks g (g=1..G)

304

Measure perceptual quality $Q_{rg}$ for each chunk g of each encoded sequence $L_r$

306

Set target quality $Q_T$, minimum quality $Q_{min}$, and minimum quality fraction f

308

Set chunk index g=1

310

Determine min bit rate $L_T$ where measured quality $Q_{rg} >= Q_T$. Store $L_T$ and the measured quality $Q_{LT}$

312

Set bit rate for chunk g of the output bitstream file, $F_g = L_T$

314

Determine min bit rate $L_{ming}$ where measured quality $Q_{rg} >= Q_{min}$. Store $L_{ming}$ and the measured quality $Q_{Lmin}$

319

g=g+1

316

Calculate bit rate/quality ratio $D_g$
$D_g = (L_T - L_{ming})/(Q_{LT} - Q_{Lmin})$

318

Is g=G?    No

320    Yes

Go to Step 400 (Figure 4)

**Figure 3**

400

```
        ┌─────────────────┐
        │  From Step 320  │
        │   (Figure 3)    │
        └────────┬────────┘
                 │
                 ▼
   ┌───────────────────────────────┐
   │  Number of chunks to reduce in │
   │  quality, N = (total chunks) x f │
   └────────────────┬──────────────┘
                    │
                    ▼
   ┌───────────────────────────────┐
   │   Select N chunks with largest Dg │
   └────────────────┬──────────────┘
                    │
                    ▼
   ┌───────────────────────────────┐
   │  For each of selected N chunks,  │
   │     replace Fg with Lmin g       │
   └────────────────┬──────────────┘
                    │
                    ▼
   ┌───────────────────────────────┐
   │   Output optimised bitstream file, │
   │  with each chunk g selected from  │
   │ sequence encoded with bit rate Fg │
   └───────────────────────────────┘
```

402

404

406

**Figure 4**

11

EP 2 541 935 A1

| Chunk g | Measured quality (Q$_{rg}$) for rates L$_r$ | | | | Bit rate required for Q$_{min}$ (L$_{min}$) | Quality of L$_{min}$ (Q$_{Lmin}$) | Bit rate required for Q$_T$ (L$_T$) | Quality of L$_T$ (Q$_{LT}$) | D$_g$ |
|---|---|---|---|---|---|---|---|---|---|
| | L$_1$ = 250Kb/s | L$_2$ = 500KB/s | L$_3$ = 1000KB/s | L$_4$ = 1800KB/s | | | | | |
| 1 | 3.70 | 4.10 | 4.70 | 4.95 | 250 | 3.70 | 500 | 4.10 | 625 |
| 2 | 3.50 | 3.80 | 4.30 | 4.85 | 250 | 3.50 | 1000 | 4.30 | 937 |
| 3 | 3.00 | 3.35 | 3.90 | 4.30 | 1000 | 3.90 | 1800 | 4.30 | 2000 |
| 4 | 2.70 | 3.10 | 3.50 | 3.90 | 1000 | 3.50 | 1800 | 3.90 | 2000 |
| 5 | 2.80 | 3.30 | 3.80 | 4.30 | 1000 | 3.80 | 1800 | 4.30 | 1600 |
| 6 | 3.40 | 3.80 | 4.40 | 4.90 | 250 | 3.40 | 1000 | 4.40 | 750 |
| 7 | 3.65 | 4.00 | 4.50 | 4.95 | 250 | 3.65 | 500 | 4.00 | 714 |
| 8 | 3.10 | 3.40 | 3.85 | 4.30 | 500 | 3.40 | 1800 | 4.30 | 1444 |

502  504  506  508  510  512  514

**Figure 5**

500

**Figure 6**

600

Encode video sequence at multiple quality levels $Q_r$ (r=1...R)

602

Divide each encoded sequence into chunks g (g=1..G)

604

Set target quality $Q_T$, minimum quality $Q_{min}$, and minimum quality fraction f

606

Determine encoded sequence quality $Q_{QT}$, where $Q_r >= Q_T$, and determine encoded sequence quality $Q_{Qmin}$, where $Q_r >= Q_{min}$

608

Measure number of bits $b_{rg}$ in each chunk of each determined sequence i.e. $b_{ming}$ and $b_{Tg}$

610

Set chunk index g=1

612

Set quality for chunk g of the output bitstream file, $F_g = Q_{QTg}$

617

g=g+1

614

Calculate quality/bit rate ratio $D_g$
$D_g = (b_{Tg} - b_{ming})$

616

Is g=G?

No

618

Yes

Number of chunks to reduce in quality, N = (total chunks) x f

620

Select N chunks with largest $D_g$

624

622

For each of selected N chunks, replace $F_g$ with $Q_{Qming}$

Output optimised bitstream file, with each chunk g selected from sequence encoded with quality $F_g$

702    704    706

| Chunk g | Measured bit count ($b_{rg}$) for qualities $Q_r$ | | | | $D_g$ (for $Q_3$-$Q_2$) |
|---|---|---|---|---|---|
| | $Q_1 = 3.0$ | $Q_2 = 3.5$ | $Q_3 = 4.0$ | $Q_4 = 4.5$ | |
| 1 | 1400 | 1545 | 1950 | 2220 | 305 |
| 2 | 1200 | 1310 | 1470 | 1800 | 160 |
| 3 | 800 | 940 | 1050 | 1280 | 110 |
| 4 | 500 | 580 | 710 | 870 | 130 |
| 5 | 600 | 690 | 850 | 1005 | 160 |
| 6 | 1100 | 1275 | 1500 | 1980 | 225 |
| 7 | 1500 | 1705 | 1990 | 2290 | 285 |
| 8 | 1000 | 1120 | 1285 | 1570 | 145 |

700

**Figure 7**

Europäisches
Patentamt

European
Patent Office

Office européen
des brevets

# EUROPEAN SEARCH REPORT

Application Number

EP 11 25 0612

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2008/133677 A1 (QUALCOMM INC [US]; SHAH DEVARSHI [US]; BHAMIDIPATI PHANIKUMAR [US]; KA) 6 November 2008 (2008-11-06)<br>* paragraph [0006] *<br>* paragraph [0030] - paragraph [0040] *<br>* paragraph [0047] - paragraph [0048] *<br>* paragraph [0057] *<br>* paragraph [0059] - paragraph [0065] *<br>* paragraph [0070] *<br>* paragraph [0076] - paragraph [0083] *<br>* figures 1,6 *<br>----- | 1-5 | INV.<br>H04N7/26 |
| Y | WO 2007/090176 A2 (QUALCOMM INC [US]; SHAH DEVARSHI [US]; WALKER KENT G [US]; COLLINS BRU) 9 August 2007 (2007-08-09)<br>* paragraph [0203] - paragraph [0204] *<br>* paragraph [0206] - paragraph [0207] *<br>* paragraph [0209] - paragraph [0211] *<br>* paragraph [0218] *<br>* paragraph [0220] - paragraph [0221] *<br>* paragraph [0223] *<br>* paragraph [0225] - paragraph [0226] *<br>* paragraph [0241] - paragraph [0244] *<br>* figures 24,26-28; table 1 *<br>----- | 1-5 | |
| A | EP 2 059 049 A1 (BRITISH TELECOMM [GB]) 13 May 2009 (2009-05-13)<br>* paragraph [0006] - paragraph [0010] *<br>* paragraph [0017] - paragraph [0023] *<br>----- | 1-5 | TECHNICAL FIELDS SEARCHED (IPC)<br><br>H04N |
| A | MULROY P ET AL: "The use of MulTCP for the delivery of equitable quality video", PACKET VIDEO WORKSHOP, 2009. PV 2009. 17TH INTERNATIONAL, IEEE, PISCATAWAY, NJ, USA, 11 May 2009 (2009-05-11), pages 1-9, XP031483136, ISBN: 978-1-4244-4651-3<br>* sections 3.2 and 3.3 *<br>----- | 1-5 | |

-/--

The present search report has been drawn up for all claims

| Place of search | Date of completion of the search | Examiner |
|---|---|---|
| The Hague | 15 September 2011 | Ferré, Pierre |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

Europäisches
Patentamt

European
Patent Office

Office européen
des brevets

**EUROPEAN SEARCH REPORT**

Application Number

EP 11 25 0612

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 847 760 A (ELMALIACH YEHUDA [IL] ET AL) 8 December 1998 (1998-12-08)<br>* column 4, line 22 - column 4, line 29 *<br>* column 5, line 4 - column 5, line 24 *<br>* column 5, line 33 - column 5, line 64 *<br>* figures 1-3 *<br>----- | 1-5 | |
| A | WO 2005/011255 A2 (THOMSON LICENSING SA [FR]; BOYCE JILL MACDONALD [US]; GIRELLINI DANIEL) 3 February 2005 (2005-02-03)<br>* page 7, line 5 - line 15 *<br>* page 8, line 8 - page 8, line 13 *<br>* page 9, line 1 - page 11, line 3 *<br>----- | 1-5 | |

TECHNICAL FIELDS
SEARCHED      (IPC)

The present search report has been drawn up for all claims

| Place of search | Date of completion of the search | Examiner |
|---|---|---|
| The Hague | 15 September 2011 | Ferré, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 25 0612

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2011

| Patent document cited in search report | | Publication date | Patent family member(s) | | Publication date |
|---|---|---|---|---|---|
| WO 2008133677 | A1 | 06-11-2008 | CN | 101658035 A | 24-02-2010 |
| | | | EP | 2153657 A1 | 17-02-2010 |
| | | | JP | 2010525739 A | 22-07-2010 |
| | | | KR | 20100005224 A | 14-01-2010 |
| | | | US | 2008260042 A1 | 23-10-2008 |
| WO 2007090176 | A2 | 09-08-2007 | EP | 1980110 A2 | 15-10-2008 |
| | | | JP | 2009525704 A | 09-07-2009 |
| | | | KR | 20080100224 A | 14-11-2008 |
| EP 2059049 | A1 | 13-05-2009 | CN | 101855907 A | 06-10-2010 |
| | | | EP | 2208351 A1 | 21-07-2010 |
| | | | WO | 2009060178 A1 | 14-05-2009 |
| | | | JP | 2011503993 A | 27-01-2011 |
| | | | US | 2010246677 A1 | 30-09-2010 |
| US 5847760 | A | 08-12-1998 | IL | 124548 A | 31-10-2001 |
| WO 2005011255 | A2 | 03-02-2005 | BR | PI0411757 A | 19-09-2006 |
| | | | CN | 101390296 A | 18-03-2009 |
| | | | EP | 1639801 A2 | 29-03-2006 |
| | | | JP | 2007525063 A | 30-08-2007 |
| | | | KR | 20060086266 A | 31-07-2006 |
| | | | MX | PA05014209 A | 31-05-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009112801 A

- WO 2007066066 A